# EUROPÄISCHE PATENTSCHRIFT

(11) **EP 3 267 629 B1**
(45) Veröffentlichungstag und Bekanntmachung des Hinweises auf die Patenterteilung: **07.08.2024**
(21) Anmeldenummer: 17179591.7
(22) Anmeldetag: 04.07.2017
(51) Int. Cl.: H04L 12/28

(54) **SYSTEM ZUR AUTOMATISIERTEN ANALYSE UND OPTIMIERUNG VON GEBÄUDEAUTOMATIONSSYSTEMEN**
SYSTEM FOR AUTOMATED ANALYSIS AND OPTIMIZATION OF BUILDING AUTOMATION SYSTEMS
SYSTÈME D'ANALYSE AUTOMATIQUE ET OPTIMISATION DES SYSTÈMES D'AUTOMATISATION DE BÂTIMENT

(30) Priorität: 05.07.2016 DE 102016212208
(43) Veröffentlichungstag der Anmeldung: 10.01.2018
(73) Patentinhaber: aedifion GmbH, 50672 Köln (DE)
(72) Erfinder: Fütterer, Johannes, 50939 Köln (DE); Müller, Dirk, 52066 Aachen (DE)
(74) Vertreter: dompatent von Kreisler Selting Werner - Partnerschaft von Patent- und Rechtsanwälten mbB

(56) Entgegenhaltungen:
- EP-A1- 2 544 059
- WO-A1-2016/094445
- US-A1- 2012 022 700
- US-A1- 2015 094 860
- US-A1- 2016 182 247

## Beschreibung

### Gebiet der Erfindung

Die Erfindung bezieht sich auf ein System zur automatisierten Analyse und Optimierung von Gebäudeautomationssystemen umfassend mindestens eine Gebäudesteuerung und mehrere davon gesteuerte Gebäudeanlagen und auf ein entsprechendes Verfahren zur Steuerung dieses Systems.

### Hintergrund der Erfindung

Der Energieverbrauch von Gebäuden in entwickelten Ländern ist für 40% des Gesamtenergieverbrauchs verantwortlich und liegt dabei in der EU und den USA über dem Anteil des industriellen Energieverbrauchs und dem des Transportsektors. Energieeffizienzsteigerung und die aktive Einbindung von Gebäuden in ein Energiesystem der Zukunft haben in diesem Kontext enormes Potential, einen Beitrag zur Senkung des Energieverbrauchs zu leisten.

Bereits jetzt werden weltweit intelligente Zähler (sogenannte "Smartmeter") zur zeitlichen Aufzeichnung des Verbrauchs an Strom oder Gas in Gebäudeanlagen integriert, die dem jeweiligen Anschlussnutzer den tatsächlichen Energieverbrauch und die tatsächliche Nutzungszeit anzeigen und in ein Kommunikationsnetz eingebunden sein können. Modellabhängig können intelligente Zähler die erhobenen Daten automatisch beispielsweise an ein Energieversorgungsunternehmen übertragen, was diesem eine intelligente Netz- und Ressourcensteuerung ermöglichen soll. Hierbei kann der Stromverbrauch für eine Vielzahl an Verbrauchern gemanagt werden, allerdings erheben diese Maßnehmen keine Information zu den Betriebsparametern der jeweiligen betriebenen Anlagen, sondern steuern lediglich dem Zeitpunkt, wann ein solcher Verbraucher ans Netz geht, um den Verbrauch in günstige Verbrauchszeiten zu günstige Verbrauchspreise zu verschieben. Hierbei können Sensoren zur Verbrauchsüberwachung beispielsweise in den Haupt-Stromanschluss des Gebäudes integriert werden, die die gemessenen Verbrauchsdaten an eine lokale

Auswerteeinheit übertragen. Versehen mit einer den Verbraucher eindeutig bezeichnenden Signatur können diese Daten zur Netz- und Verbrauchssteuerung verwendet werden, wobei der Nutzer ein Nutzerprofil übermittelt bekommen kann und gegebenenfalls Präferenzen für seinen Energieverbrauch vorgeben kann. Ein solches Echtzeit-Verbrauchsmanagement erlaubt es lediglich, Netzlasten in günstige Zeitperioden zu verschieben und eine gleichmäßigere Netzbelastung zu erreichen.

Hierbei ist es mit den intelligenten Zählern nicht möglich, den Energieverbrauch bestimmten Geräten oder Gebäudeanlagen direkt zuzuordnen, sofern diese Zähler nicht in der Zuleitung für das betreffende Gerät angeordnet sind. Sofern eine Zuordnung gewünscht ist, können diese Zuordnungen bisher nur anhand von Messungen der tatsächlichen Verbrauchskurven der betreffenden Geräte und Gebäudeanlagen vor Ort vorgenommen werden.

US 2015/094860 A1 offenbart die Nutzung eines geobegrenzten Umkreises für eine energieeffiziente Gebäudesteuerung. Das Verfahren und entsprechende System assoziiert mobile persönliche Telekommunikationsgeräte von Hausbewohnern mit dem Raum und Platz, den sie in einem Gebäude oder anderen Einrichtungen bewohnen und erzeugt Anweisungen an ein Gebäudeautomatisationssystem basierend auf den Änderungen der Position der mobilen Kommunikationsgeräte relativ zu dem zugeordneten Raum oder Platz.

EP 2 544 059 A1 offenbart ein Energiequellenmanagement-Kontrollsystem und ein entsprechendes Verfahren basierend auf durch das Internet bereitgestellte IT-Infrastruktur, dem sogenannten Cloud-Computing, umfassend eine Gebietssteuerung für die Gebietssteuerung von jedem energieverrauchenden Gerät gemäß nutzerdefinierter Parameter und den Übermitteln der Nutzerdefinierten Parameter zu einer Cloud-Computing-Management-Steuerplattform; einen Energieverbrauchsparameterkollektor zum Sammeln von Parametern zum Energieverbrauch eines jeden energieverbrauchenden Geräts und zum Übermitteln die gesammelten Parameter zu der Cloud-Computing-Management-Steuerplattform; und die der Cloud-Computing-Management-Steuerplattform zum Justieren eines Gebietskontrollmodus gemäß der bezüglich des Energieverbrauchs eines jeden energieverbrauchenden Geräts gesammelten und nutzerdefinierten Parameter.

US 2012/70022700 A1 offenbart eine Gebäudesteuerung eines Gebäudeautomationssystems zur automatisierten Analyse und Optimierung des Gebäudeautomationssystems umfassend mehrere Gebäudeanlagen, die mittels einer Datenverbindung zur Steuerung durch die Gebäudesteuerung an die Gebäudesteuerung angeschlossen sind, wobei ein Datenmodul der Gebäudesteuerung mit dem Gebäudeautomationssystem auf geeignete Weise verbunden ist, um zumindest die im Gebäudeautomationssystem zwischen Gebäudesteuerung und Gebäudeanlagen kommunizierten gebäudetechnischen Daten der Gebäudeanlagen automatisch einzulesen und an einen Analyseserver zu übermitteln. US 2016/0182247 A1 offenbart eine ähnliches, Cloud-basiertes System. WO 2016/094445 A1 offenbart ein System, bei dem eine Fenstersteuerung mit mindestens einem weiteren System eines Gebäudeautomationssystems kommuniziert.

Durch die Vernetzung von Gebäuden werden im Jahre 2020 über 980 Millionen Messstellen in Gebäuden installiert sein, was einem Datenvolumen von 431.000 Petabyte pro Jahr entspricht. Bisher war es mit vertretbarem Aufwand nicht möglich, die grundsätzlich verfügbaren Daten für eine optimierte Anlagensteuerung so zu analysieren, dass neben einem allgemeinen Energiemanagement der Verbrauchszeitintervalle Parameter in der Anlagensteuerung identifiziert werden können, die von der programmierten Gebäudesteuerung nicht optimal gesetzt sind wie beispielsweise Innentemperatur relativ zur Außentemperatur als Resultat der Heizungssteuerung (Thermostate, Brennereinstellungen, Vorlauftemperaturen) oder andere Parameter für diese oder andere Gebäudeanlagen. Eine hohe Mängelbehaftung in gebäudetechnischen Systemen führt zudem zu einem grundsätzlich zu hohen Energieverbrauch unabhängig von günstigen Verbrauchszeiten im Stromnetz und zu hohen Instandhaltungskosten bei der Wartung der Gebäudeanlagen. Weiterhin sind Gebäudeenergiesysteme oft nicht in der Lage, die Bedürfnisse (thermischer Komfort, Raumluftqualität und sonstige Energiedienstleistungen wie Prozesswärme und - Kälte zu befriedigen. Um Kenntnis über diese Parameter aus der Gebäudesteuerung erlangen zu können, sind bisher Detailkenntnisse der Anlagenprogrammierung von Nöten, was ohne Mitarbeit des jeweiligen Anlagenherstellers bisher nicht möglich ist. Es sind derzeit keine Werkzeuge verfügbar, die in der Lage sind, unabhängig von der vorhandenen Gebäudesteuerung und unabhängig von Art und Anzahl der dadurch gesteuerten Gebäudeanlagen die Betriebsparameter zu analysieren und die Qualität der lokal implementierten Gebäudesteuerung auf deren Effizienz überhaupt zu prüfen, geschweige denn zu optimieren.

Es ist daher wünschenswert, ein solches Werkzeug zur Verfügung zu haben, um auf einfache Weise die Betriebskosten oder den Wartungsaufwand für die Gebäudeanlagen durch eine verbesserte Gebäudesteuerung senken zu können.

### Zusammenfassung der Erfindung

Es ist eine Aufgabe der vorliegenden Erfindung, ein Werkzeug zur Verfügung zu stellen, um auf einfache Weise die Betriebskosten oder den Wartungsaufwand für die Gebäudeanlagen durch eine verbesserte Gebäudesteuerung senken zu können.

Diese Aufgabe wird gelöst durch ein System zur automatisierten Analyse und Optimierung von Gebäudeautomationssystemen umfassend mindestens ein Gebäudeautomationssystemmit mindestens einer Gebäudesteuerung und mehrere Gebäudeanlagen, die mittels einer Datenverbindung zur Steuerung durch die Gebäudesteuerung an die Gebäudesteuerung angeschlossen sind, wobei nachträglich ein Datenmodul mit dem jeweiligen bereits vorher bestehenden Gebäudeautomationssystem auf geeignete Weise verbunden ist, um zumindest die im Gebäudeautomationssystem kommunizierten Betriebsrohdaten der Gebäudeanlagen automatisch einzulesen und an einen Analyseserver zu übermitteln, wobei der Analyseserver dazu vorgesehen ist, ohne weitere Kenntnisse der Gebäudesteuerung und der Gebäudeanlagen aus einer Gesamtmenge der übermittelten Betriebsrohdaten unter Anwendung eines auf dem Analyseserver ausgeführten Analyseprogramms einzelne Betriebsrohdaten einzelnen physikalischen Parametern und einzelnen Gebäudeanlagen zuzuordnen, auf deren Basis eine Qualität der Steuerung der Gebäudeanlagen durch die Gebäudesteuerung überprüft wird.

Hierbei bezeichnet der Begriff Gebäudeautomationssystem die Gesamtheit der Gebäudeanlagen und Gebäudesteuerungen, die die Gebäudeanlagen im einem oder mehreren Gebäuden oder einem Gebäudekomplex (Liegenschaft) steuern, sowie die die einzelnen Anlagen beziehungsweise Komponenten des Gebäudeautomationssystems verbindenden Datenverbindungen. Der Begriff "Gebäude" umfasst hier alle Arten von Gebäuden einschließlich Wohngebäude, Nutzgebäude, Industrieanlagen, Werkhallen etc. Der Begriff "Gebäudesteuerung" bezeichnet den Teil des Gebäudeautomatisationssystems, mit dem die angeschlossenen Geräte und Anlagen gesteuert werden. Der Begriff "Steuerung" bezeichnet hierbei sowohl das Steuern als auch das Regeln von Gebäudeanlagen und schließt den Datenaustausch zwischen Steuerung und Anlagen in beide Richtungen mit ein. Der Begriff "Gebäudeanlage" bezeichnet dabei alle Anlagen eines Gebäudes, die durch eine Gebäudesteuerung gesteuert werden und mit denen ein Datenaustausch stattfindet. Solche Gebäudeanlagen sind beispielsweise Anlagen zur Gebäudeklimatechnik, Anlagen zur Raumklimatechnik, Heizungsanlagen, Beleuchtungsanlagen und vieles mehr. Die Datenverbindung zwischen Gebäudesteuerung und Gebäudeanlagen kann dabei als BUS-Systeme wie BACnet/IP, LON/IP, KNX, BACnet/MSTP ausgeführt sein.

Der Begriff "Betriebsrohdaten" bezeichnet alle in einem Gebäudeautomatisationssystem zwischen Gebäudesteuerung und Gebäudeanlagen kommunizierten gebäudetechnischen Daten. Zur Aufstellung von Zeitreihen an Messwerten können die Betriebsrohdaten bereits Zeitinformation umfassen. In einer Ausführungsform versieht das Datenmodul die eingelesenen Betriebsrohdaten mit einem Zeitstempel, um bei der Auswertung der Betriebsrohdaten nicht von dem Vorhandensein von Zeitinformationen in den Betriebsrohdaten abhängig zu sein. Der Zeitstempel gibt dabei den Zeitpunkt des Einlesens der Betriebsrohdaten an. Da das Einlesen in Echtzeit geschieht, entspricht der Zeitstempel dem Zeitpunkt, an dem die Betriebsrohdaten den betreffenden Dateninhalt besaßen. In diesem Fall wird dem Analyseserver ein Datenpaket umfassend die Betriebsrohdaten und den jeweiligen Zeitstempel übermittelt. Die Übermittlung der Betriebsrohdaten zum Analyseserver kann auf jede dafür geeignete Weise durchgeführt werden. In einer Ausführungsform wird die Übermittlung zumindest der Betriebsrohdaten an den Analyseserver mittels einer Internetverbindung oder einer GSM/WLAN/Funkverbindung oder über eine Verbindung (7) über ein doppeltes Ethernet vorgenommen. Die drahtlose Datenübertragung ermöglicht einen sehr flexiblen Einsatz des erfindungsgemäßen Gebäudeautomatisationssystems und trägt den Sicherheitsbedürfnissen der Betreiber der Gebäudeautomationssystemen Rechnung.

Die Systembetreiber von Gebäudeautomatisationssystemen haben in der Regel kein Interesse an einer Offenlegung des Systemverhaltens des jeweiligen Gebäudeautomatisationssystems. Ein Vorteil des erfindungsgemäßen Systems besteht darin, dass das Datenmodul nachträglich in beliebige lokal vorhandene Gebäudeautomatisationssysteme integriert werden kann, ohne dafür Systemkenntnisse über das jeweilige Gebäudeautomatisationssystem besitzen zu müssen. Das Datenmodul repräsentiert dabei eine mit geeigneten Komponenten hergestellte IP-Verbindung mit dem Gebäudeautomationssystem mit möglichst vollem Zugriff auf die IP-Teilnehmer im Gebäudeautomationssystem, wobei der Zugriff das Einlesen möglichst aller kommunizierten Daten bezeichnet. Dadurch wird der Datenerfassungsprozess skalierbar gemacht. Dabei kann in einer Ausführungsform das Datenmodul als Cloud-Lösung implementiert sein, wobei ein Zugriff des Datenmoduls auf die Betriebsrohdaten des Gebäudeautomationssystems durch das Gebäudeautomationssystem gewährt wird. Der Betreiber des Gebäudeautomationssystems kann dabei den Zugriff mittels entsprechender Einstellung von Zugriffsrechten beziehungsweise sogenannter Firewall-Einstellungen realisieren. Nach ermöglichtem Zugriff wird das Einlesen der Betriebsrohdaten ohne eine Gerätetreiberinstallation und/oder Vornahme von Einstellungen auf der Gebäudesteuerung ausgeführt.

In einer alternativen Ausführungsform ist das Datenmodul mit der bereits vorher bestehenden Datenverbindung des Gebäudeautomatisationssystems auf geeignete Weise verbunden, um zumindest die über die Datenverbindung kommunizierten Betriebsrohdaten der Gebäudeanlagen automatisch einzulesen. Hierbei stellt das Datenmodul eine nachträglich eingefügte Hardware-Komponente dar. In einer Ausführungsform ist das Datenmodul dazu als eine sogenannte Plug-and-Play-Komponente ausgeführt, die das Einlesen der Betriebsrohdaten ohne benötigte Gerätetreiberinstallation und/oder Vornahme von Einstellungen auf der Gebäudesteuerung ausführen kann. Das Datenmodul kann dabei beispielsweise als OPC-Kommunikationsschnittstelle ausgeführt sein. Das Datenmodul kann dabei in das Kommunikationsnetzwerk zwischen Gebäudesteuerung und Gebäudeanlagen beispielsweise über BUS-Klemmen und Ethernet/IP eingebracht werden. Dabei können alle momentan genutzten Datenprotokolle beginnend mit BACnet automatisch ausgelesen werden. Das Datenmodul abstrahiert den Datenerfassungsprozess weitestgehend von der lokalen Datenverbindung und den Kommunikationsprotokollen der Gebäudesteuerung. Damit wird eine herstellerübergreifende Datenerfassung ermöglicht, die nicht von der konkret vorhandenen Gebäudesteuerung abhängt, sondern für alle Gebäudesteuerungen verwendet werden kann, die über Datenverbindungen mit den Gebäudeanlagen kommunizieren. Durch die geräteunabhängige Datenerfassung mit dem Datenmodul können größere Liegenschaften, die für unterschiedliche Gebäudekomplexe unterschiedliche Gebäudeautomatisationssysteme mit unterschiedlichen Gebäudesteuerungen verwenden, mit dem erfindungsgemäßen Gebäudeautomatisationssystem die eigenen Daten aller Bestandsgebäude auf einfache Weise sich nutzbar machen, ohne sich dabei um die technische Ausgestaltung der einzelnen Gebäudeautomatisationssysteme einschließlich der Gebäudesteuerung und Gebäudeanlagen in das erfindungsgemäße System einfließen lassen zu müssen.

Die Analyse durch das Analyseprogramm basiert auf einem sogenannten Big-Data-Ansatz. Aus den verfügbaren Daten werden bestimmte Informationen herausgefiltert, welche Eigenschaften über den grundsätzlichen Anlagenbetrieb zulassen. Damit die Datenanalyse ohne Kenntnis der Gebäudesteuerung und der Gebäudeanlagen möglich ist, können statistische Verfahren sowie das sogenannte maschinelle Lernen unter Verwendung von "Random-Forrest", "Bagged-Trees", "Hidden-Markov-Modellen", oder "Support-Vector-Maschinen" genutzt werden, um aus großen Datenmengen Muster zu erkennen wie beispielsweise Zeitreihen von bestimmten Typzeitreihen. Das Random-Forrest-Verfahren ist ein Klassifikationsverfahren, welches aus mehreren verschiedenen, unkorrelierten Entscheidungsbäumen besteht. Alle Entscheidungsbäume sind unter einer bestimmten Art von Randomisierung während des Lernprozesses gewachsen. Für eine Klassifikation darf jeder "Baum" in diesem "Wald" eine Entscheidung treffen und die Klasse mit den meisten Stimmen entscheidet die endgültige Klassifikation. Bagged-Trees ist eine Methode zur Baumerstellung, um Vorhersagen aus verschiedenen Regressions- oder Klassifikationsmodellen zu kombinieren. Das Hidden-Markov-Modell ist ein stochastisches Modell, in dem ein System durch eine sogenannte Markov-Kette mit unbeobachteten Zuständen modelliert wird. Eine Support-Vector-Maschine ist ein Klassifikator. Eine Support-Vector-Maschine unterteilt eine Menge von Objekten so in Klassen, dass um die Klassengrenzen herum ein möglichst breiter Bereich frei von Objekten bleibt; sie ist ein sogenannter Breiter-Rand-Klassifikator. Support-Vector-Maschinen können sowohl zur Klassifizierung als auch zur Regression verwendet werden und sind dabei keine Maschinen im herkömmlichen Sinne, sondern ein mathematisches Verfahren der Mustererkennung, das in Computerprogrammen, hier dem Analyseprogramm umgesetzt werden kann. Dabei kann eine Datenvorbearbeitung wie beispielsweise eine Frequenzbandfilterung, modellbasierte Lückeninterpolation, eine Ausreißerbehandlung einzelner Betriebsrohdaten der eigentlichen Datenanalyse vorgeschaltet sein. In einer Ausführungsform werden die übermittelten Betriebsrohdaten durch das Analyseprogramm nach ihrer Datenstruktur kategorisiert, klassifiziert und in entsprechenden Zeitreihen gemäß den jeweiligen Kategorien und Klassifikationen abspeichert. Hierbei werden aus vielen Zeitreihen aus heutigen Gebäudeautomationssystemen (Größenordnung beispielsweise 50 bis 30000 Zeitreihen) zunächst die Typklassen der Zeitreihen ermittelt (beispielsweise Temperaturen, Sollwerte, Verbräuche, gesetzte Arbeitspunkte, gesetzte Anlageneinstellungen, Druck, Leistung, Luftfeuchtigkeit, Alarmzustände etc. aus Plausibilitätsbetrachtungen der eingelesenen Werte der Betriebsrohdaten) und anschließend automatisch Bestandteile des Gebäudesystems (Gebäudeanlagen) erkannt, beispielsweise dazu korrelierende Wärmepumpen, Kessel, Umwälzpumpen und so weiter, welche diese Zeitreihen erzeugen.

Die physikalischen Parameter können dabei Betriebsrohdaten in ihrer zeitlichen Abfolge beispielsweise von Temperatursensoren in Flüssigkeiten, wie Wasser, und in Gasen, wie Luft, eindeutig als solche zu identifizieren. Anhand einer Clusteranalyse der Temperaturen lässt sich zwischen Raumtemperaturen, Umgebungstemperaturen, Energiewandlungsmaschinentemperaturen Energieverteiltemperaturen und so weiter unterscheiden. Es können so Rückschlüsse über beispielsweise Fensteröffnungen, zu hohe Raumtemperaturen in Abhängigkeit der Außenlufttemperatur oder überhöhte Vorlauftemperaturen getätigt werden. Diese geben sofort Auskünfte über die Stellen, an denen Energie gespart werden kann.

Das Analyseprogramm wird dabei auf einem Analyseserver ausgeführt. Der Begriff "Analyseserver" bezeichnet hier die Computer-Infrastruktur (Hardware und Software), die die Computerfunktionalitäten zum Betrieb des Gebäudeautomatisationssystems, insbesondere die zur Ausführung des Analyseprogramms und zur Datenübertragung mit dem Datenmodul und gegebenenfalls mit der Gebäudesteuerung bereitstellt.

Die vorhandenen gebäudetechnischen Regelkreise in Gebäudeautomatisierungs-systemen besitzen erhebliches Verbesserungspotential, das mit dem erfindungs-gemäßen Gebäudeautomatisationssystem als Qualität der Steuerung sichtbar gemacht und nachfolgend die Regelkreise auf Basis der Datenanalyse optimiert werden können.

Gebäude sind momentan passive "Black-Box"-Verbraucher mit starren, nicht dynamischen Energieverbrauchsmodellen. Grundsätzlich bergen Gebäude, insbesondere komplexere Gebäude, jedoch sehr viel Flexibilität zur Anpassung ihrer Energieaufnahme sowie zum Teil ihrer Energieerzeugung. Komplexere Gebäudeenergiesysteme verfügen heute über eine Gebäudeautomation. In Deutschland beläuft sich deren Zahl auf in etwa 1,8 Millionen Gebäude. Zum Betrieb dieser Gebäudeautomation ist eine Vielzahl von Datenpunkten von Nöten. Wegen die Vielzahl der Daten auf den unterschiedlichen Systemen der Gebäudeleittechnik, die inhärente Unübersichtlichkeit und technische Barrieren gibt es bisher kein Verfahren zur ganzheitlichen Nutzung dieser Daten. Fortschrittlichste Systeme speichern momentan höchstens eine kleine Auswahl an Datenpunkten (z.B. Trendkurven). Der Informationsgehalt, der in der Gesamtheit der Daten eines Systems vorhanden sind, wird nicht analysiert oder genutzt.

Die Verfügbarkeit von gebäudetechnischen Daten ist heute nicht in einem ausreichenden Maße gegeben. Daten, die in Gebäudeautomationssystemen nach dem Stand der Technik vorhanden sind und eine Vielzahl von Informationen enthalten, werden mangels eines entsprechenden Analysesystems beziehungsweise eines entsprechenden Analyseverfahrens nicht zur Verbesserung der Energieeffizienz genutzt. Die Nachrüstung eines konventionellen Monitoring-Systems ist in vielen Fällen nicht oder nur mit einem sehr großen finanziellen Aufwand möglich.

Die vorliegende Erfindung ermöglicht dagegen die Datengewinnung und Analyse von gebäudetechnischen Daten mit geringen Investitions- und laufenden Betriebskosten, wenig personellem Aufwand, wobei die in der Gesamtmenge enthaltenen Informationen mittels Auswertung und Zuordnung verfügbar gemacht werden und weitere Handlungen daraus abgeleitet werden können. Das erfindungsgemäße System ermöglicht somit sowohl die automatisierte Analyse als auch die automatische Optimierung von Gebäudeautomationssystemen. Mit der vorliegenden Erfindung wird ein Werkzeug zur Verfügung gestellt, mit dem auf einfache Weise die Betriebskosten oder der Wartungsaufwand für die Gebäudeanlagen durch eine verbesserte Gebäudesteuerung gesenkt werden können.

In einer Ausführungsform sind im Gebäudeautomatisationssystem dazu Musterzeitreihen für eine Vielzahl an unterschiedlichen Gebäudeanlagen hinterlegt, auf die das Analyseprogramm zugreifen kann, um anhand der Musterzeitreihen eine Wahrscheinlichkeit zu bestimmen, dass eine Zeitreihe an Betriebsrohdaten einer bestimmten Gebäudeanlage zuzuordnen ist. Bei der Kombination von den voranstehend genannten statistischen Verfahren sowie des sogenannten maschinellen Lernens zur Klassifizierung und Kategorisierung der Betriebsrohdaten mit technischem Wissen in Form von Musterzeitreihen kann diese Zuordnung getroffen werden. Somit werden die in den Betriebsrohdaten enthaltenen Informationen automatisiert ohne zusätzlichen manuellen Aufwand verfügbar gemacht. Dadurch kann der rechenintensive Prozess eines Datenpunktmappings enorm beschleunigt werden. Dabei werden blanke Zeitreihen anhand von statistischen Merkmalen in Verbindung mit der Nutzung der Musterzeitreihen (digitalisiertes Expertenwissen) analysiert. In einer Ausführungsform ist dabei das Analyseprogramm dazu ausgestaltet, die Zeitreihe an Betriebsrohdaten einer bestimmten Gebäudeanlage zuzuordnen, sofern die für diese Zeitreihe bestimmte Wahrscheinlichkeit einen vordefinierten Schwellenwert übersteigt. Mit dem Schwellenwert wird verhindert, dass möglicherweise nichtzutreffende Zuordnungen bei geringen Wahrscheinlichkeitswerten automatisch falsch getroffen werden.

In einer weiteren Ausführungsform ist das Analyseprogramm dazu ausgestaltet, aus den zugeordneten Gebäudeanlagen automatisch ein Anlagenschaltbild für die jeweilige Gebäudesteuerung zu erstellen und dynamisch bei Zuordnung weiterer Zeitreihen zu Gebäudeanlagen anzupassen. Durch die automatische gebäudetechnische Topologie-Erkennung (die Zuordnung von Betriebsrohdaten zu Gebäudeanlagen verifiziert das Vorhandensein eben dieser Gebäudeanlagen, was als Topologie-Erkennung bezeichnet ist) auf Basis von regelbasierten Algorithmen werden Verbindungen von einzelnen Komponenten erkannt. Daraus kann eine System-Topologie des jeweiligen betreffenden Gebäudekomplexes als Anlagenschaltbild identifiziert werden, wodurch Betriebsanalysen auf Gesamtenergiesystemebene ermöglicht werden.

In einer Ausführungsform ist das Analyseprogramm dazu ausgestaltet, bei einem Wertesprung in den Betriebsrohdaten einer Zeitreihe eine Korrelation mit anderen Wertesprüngen in anderen Zeitreihen zu überprüfen und bei festgestellter Korrelation im Anlagenschaltbild die zugeordneten Gebäudeanlagen als miteinander verknüpft darzustellen. Da den Betriebsrohdaten physikalische Prozess zugrunde liegen, die Einfluss auf andere Prozesse haben können, stellt eine solche Kreuzkorrelationsprüfung eine effektive Methode dar, Betriebsrohdaten und die zugeordneten Gebäudeanlagen miteinander in Verbindung zu setzen.

In einer weiteren Ausführungsform werden zumindest die übermittelten Betriebsrohdaten in einer zentralen Cloud gespeichert. In der zentralen Cloud wird dabei eine Datenbank gehosted, d.h. die Unterbringung auf einem Web-Server, wobei der Web-Server von einem vertrauenswürdigen Anbieter betrieben und damit der Ort der Cloud bestimmt ist. Auf diese Datenbank greift das Analyseprogramm zu, dessen Ergebnisse wiederum in der Datenbank gespeichert werden. Die dynamische Datenhaltung in Form von Datenbanken ist nur für eine begrenzte Zeit sinnvoll. Wesentlich effizienter ist dagegen eine historisierte Datenhaltung in Datencontainern wie beispielsweise HDF5, wenn es sich um abgeschlossene Datensets handelt, beispielsweise für Daten die mehr als zwei Jahre zurückliegen.

In einer weiteren Ausführungsform ist der Analyseserver dazu vorgesehen, auf Basis der analysierten Betriebsrohdaten Steuerbefehle an die Gebäudesteuerung zu übermitteln, um die Steuerung der Gebäudeanlagen zu optimieren. Hierzu muss der Analyseserver eine Datenverbindung mit Schreibrechten zur Gebäudesteuerung besitzen. Der Fachmann ist in der Lage, eine solche Datenverbindung zur Gebäudesteuerung auszuführen. Mit der Möglichkeit, Steuerbefehle an die Gebäudesteuerung zu übermitteln, kann der Betrieb der Gebäudeanlagen jederzeit unverzüglich auf Basis der Ergebnisse des Analyseprogramms automatisch angepasst werden. Die für diese Gebäudeanlagen bevorzugte Betriebsweise kann dabei im erfindungsgemäßen Gebäudeautomatisationssystem beispielsweise in form von sogenannten Lookup-Tabellen hinterlegt sein, auf die das Analyseprogramm und der Analyseserver Zugang haben. Das Analyseprogramm kann dabei die Ist-Betriebsrohdaten mit den Soll-Betriebsrohdaten vergleichen und zum Angleichen der Ist- an die Soll-Betriebsrohdaten entsprechend Steuerbefehle übermitteln.

Die Erfindung betrifft des Weiteren ein Verfahren zur Steuerung eines erfindungsgemäßen Gebäudeautomatisationssystems umfassend mindestens ein Gebäudeautomationssystem mit mindestens einer Gebäudesteuerung und mehrere Gebäudeanlagen, die mittels einer Datenverbindung zur Steuerung durch die Gebäudesteuerung an die Gebäudesteuerung angeschlossen sind, umfassend die Schritte:
- nachträgliches Verbinden eines Datenmoduls mit dem jeweiligen bereits vorher bestehenden Gebäudeautomationssystem auf geeignete Weise;
- automatisches Einlesen von Betriebsrohdaten, die im Gebäudeautomationssystem kommuniziert werden, mittels des Datenmoduls;
- Übermitteln zumindest der eingelesenen Betriebsrohdaten von dem Datenmodul zu einem Analyseserver;
- Zuordnen einzelner Betriebsrohdaten aus der Gesamtmenge der Betriebsrohdaten zu einzelnen physikalischen Parametern und einzelnen Gebäudeanlagen durch ein auf dem Analyseserver ausgeführtes Analyseprogramm ohne weitere Kenntnisse der Gebäudesteuerung und der Gebäudeanlagen; und
- Überprüfen einer Qualität der Steuerung der Gebäudeanlagen durch die Gebäudesteuerung auf Basis der zugeordneten Betriebsrohdaten.

In einer Ausführungsform umfasst das Verfahren die weiteren Schritte:
- Versehen der eingelesenen Betriebsrohdaten mit einem Zeitstempel durch das Datenmodul zur Bildung eines Datenpakets, das nachfolgend im Übermittlungsschritt an den Analyseserver übermittelt wird, und
- Kategorisieren und Klassifizieren der übermittelten Betriebsrohdaten nach ihrer Datenstruktur und Abspeichern der Betriebsrohdaten in entsprechenden Zeitreihen gemäß den jeweiligen Kategorien und Klassifikationen durch das Analyseprogramm.

In einer weiteren Ausführungsform umfasst das Verfahren die weiteren Schritte:
- Zugreifen des Analyseservers auf im Gebäudeautomatisationssystem hinterlegte Musterzeitreihen für eine Vielzahl an unterschiedlichen Gebäudeanlagen;
- Bestimmen einer Wahrscheinlichkeit für mindestens eine der Zeitreihen an Betriebsrohdaten anhand der Musterzeitreihen, dass diese Zeitreihe einer bestimmten Gebäudeanlage zuzuordnen ist; und
- Zuordnen der Zeitreihe an Betriebsrohdaten zu einer bestimmten Gebäudeanlage durch das Analyseprogramm, sofern die für diese Zeitreihe bestimmte Wahrscheinlichkeit einen vordefinierten Schwellenwert übersteigt.

In einer weiteren Ausführungsform umfasst das Verfahren die weiteren Schritte:
- automatisches Erstellen eines Anlagenschaltbildes für die jeweilige Gebäudesteuerung aus den zugeordneten Gebäudeanlagen; und
- dynamisches Anpassen des Anlagenschaltbildes bei Zuordnung weiterer Zeitreihen zu den Gebäudeanlagen.

In einer weiteren Ausführungsform umfasst das Verfahren die weiteren Schritte:
- Überprüfen durch das Analyseprogramm, ob bei einem Wertesprung in den Betriebsrohdaten einer Zeitreihe eine Korrelation mit anderen Wertesprüngen in anderen Zeitreihen besteht, und
- Verknüpfen der den jeweiligen Zeitreihen zugeordneten Gebäudeanlagen im Anlagenschaltbild miteinander bei festgestellter Korrelation der Wertesprünge der jeweiligen Zeitreihen.

In einer weiteren Ausführungsform umfasst das Verfahren den weiteren Schritt des Übermittelns von Steuerbefehlen an die Gebäudesteuerung auf Basis der analysierten Betriebsrohdaten zur Optimierung der Steuerung der Gebäudeanlagen durch den Analyseserver.

### Kurze Beschreibung der Abbildungen

Diese und andere Aspekte der Erfindung werden im Detail in den Abbildungen wie folgt gezeigt:
- Fig.1:: ein Ausführungsbeispiel eines erfindungsgemäßen Systems zur automatisierten Analyse und Optimierung von Gebäudeautomationssystemen;
- Fig.2:: eine weitere Ausführungsform eines erfindungsgemäßen Verfahrens zur Steuerung des erfindungsgemäßen Systems aus Fig.1.

### Detaillierte Beschreibung der Ausführungsbeispiele

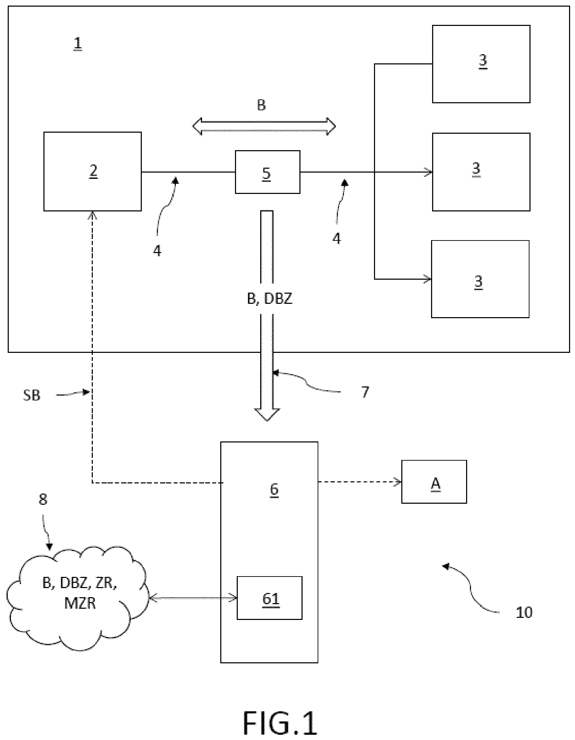

Fig.1 zeigt ein Ausführungsbeispiel eines erfindungsgemäßen Systems 10 umfassend ein Gebäudeautomationssystem 1 mit einer Gebäudesteuerung 2 und hier beispielhaft dargestellten drei Gebäudeanlagen 3, die mittels einer Datenverbindung 4 zur Steuerung durch die Gebäudesteuerung 2 an die Gebäudesteuerung 2 angeschlossen sind und über die die Betriebsrohdaten B zwischen Gebäudesteuerung 2 und Gebäudeanlagen 3 übermittelt werden. Hier ist nachträglich ein Datenmodul 5 mit dem bereits bestehenden Gebäudeautomationssystem 1 verbunden, um zumindest die im Gebäudeautomationssystem 1 kommunizierten Betriebsrohdaten B der Gebäudeanlagen 3 automatisch einzulesen. Das Datenmodul repräsentiert dabei eine mit geeigneten Komponenten hergestellte IP-Verbindung mit dem Gebäudeautomationssystem 1 mit möglichst vollem Zugriff auf die IP-Teilnehmer (Gebäudesteuerung 2 und Gebäudeanlagen 3) im Gebäudeautomationssystem 1 zum Einlesen aller kommunizierten Daten. Dabei kann das Datenmodul 5 als Cloud-Lösung implementiert sein (hier nur schematisch dargestellt), wobei ein Zugriff des Datenmoduls 5 auf die Betriebsrohdaten des

Gebäudeautomationssystems 1 durch das Gebäudeautomationssystem 1 gewährt wird. Der Betreiber des Gebäudeautomationssystems 1 kann dabei den Zugriff mittels entsprechender Einstellung von Zugriffsrechten beziehungsweise sogenannter Firewall-Einstellungen realisieren. Das Datenmodul 5 kann aber auch als Hardware-Komponente direkt oder indirekt mit der bereits vorher bestehenden Datenverbindung 4 des Gebäudeautomatisationssystems 1 verbunden sein, um die über die Datenverbindung 4 kommunizierten Betriebsrohdaten der Gebäudeanlagen 3 automatisch einzulesen. Hierbei kann das Datenmodul 5 als sogenannte Plug-and-Play-Komponente ausgeführt sein, die das Einlesen der Betriebsrohdaten B ohne benötigte Gerätetreiberinstallation und/oder Vornahme von Einstellungen auf der Gebäudesteuerung 2 ausführen kann.

Außerdem versieht das Datenmodul 5 in der in Fig.1 gezeigten Ausführungsform die eingelesenen Betriebsrohdaten B mit einem Zeitstempel Z zu einem Datenpaket DBZ. Nach dem Einlesen werden die entsprechenden Datenpakete DBZ mit Zeitstempel Z an einen Analyseserver 6 übermittelt Die Übermittlung an den Analyseserver 6 wird dabei vorzugsweise mittels Internetverbindung 7 oder GSM/WLAN/Funkverbindung 7 oder über eine Verbindung 7 über ein doppeltes Ethernet vorgenommen. Der Analyseserver 6 ordnet dann ohne weitere Kenntnisse der Gebäudesteuerung 2 und der Gebäudeanlagen 3 aus einer Gesamtmenge der übermittelten Betriebsrohdaten B unter Anwendung eines auf dem Analyseserver 6 ausgeführten Analyseprogramms 61 einzelne Betriebsrohdaten B einzelnen physikalischen Parametern und einzelnen Gebäudeanlagen 3 zu, auf deren Basis eine Qualität der Steuerung der Gebäudeanlagen 3 durch die Gebäudesteuerung 2 überprüft wird. Dabei kategorisiert und klassifiziert das Analyseprogramm 61 die übermittelten Betriebsrohdaten B nach ihrer Datenstruktur und speichert die kategorisierten und klassifizierten Betriebsrohdaten B in entsprechenden Zeitreihen ZR gemäß den jeweiligen Kategorien und Klassifikationen ab. Des Weiteren kann das Analyseprogramm 61 auf im System 10 hinterlegte Musterzeitreihen MZR für eine Vielzahl an unterschiedlichen Gebäudeanlagen 3 zugreifen und anhand der Musterzeitreihen MZR eine Wahrscheinlichkeit W bestimmen, dass eine Zeitreihe ZR an Betriebsrohdaten B einer bestimmter Gebäudeanlage 3 zuzuordnen ist. Das Analyseprogramm 61 ist in dieser Ausführungsform dazu ausgestaltet, die Zeitreihe ZR an Betriebsrohdaten B einer bestimmten Gebäudeanlage 3 zuzuordnen, sofern die für diese Zeitreihe ZR bestimmte Wahrscheinlichkeit W einen vordefinierten Schwellenwert SW übersteigt. Das Analyseprogramm 61 kann ferner dazu ausgestaltet sein, aus den zugeordneten Gebäudeanlagen 3 automatisch ein Anlagenschaltbild A für die jeweilige Gebäudesteuerung 2 zu erstellen (gestrichelt dargestellt) und dynamisch bei Zuordnung weiterer Zeitreihen ZR zu Gebäudeanlagen 3 anzupassen. Hierbei kann das Analyseprogramm 61 bei einem Wertesprung in den Betriebsrohdaten B einer Zeitreihe ZR eine Korrelation mit anderen Wertesprüngen in anderen Zeitreihen ZR überprüfen und bei festgestellter Korrelation im Anlagenschaltbild A die zugeordneten Gebäudeanlagen 3 als miteinander verknüpft darzustellen. Eine Korrelation kann dabei als festgestellt gelten, wenn die Wertesprünge in verschiedenen Zeitreihen mehrfach in einem gleichen zeitlichen Abstand zueinander auftreten. In dieser Ausführungsform werden die übermittelten Betriebsrohdaten B, die Datenpakete DBZ, die Zeitreihen ZR an Betriebsrohdaten B und die Musterzeitreihen MZR in einer zentralen Cloud 8 gespeichert. Ferner kann der Analyseserver 6 dazu vorgesehen sein, auf Basis der analysierten Betriebsrohdaten B Steuerbefehle SB an die Gebäudesteuerung 2 zu übermitteln (gestrichelt dargestellt), um die Steuerung der Gebäudeanlagen 3 zu optimieren.

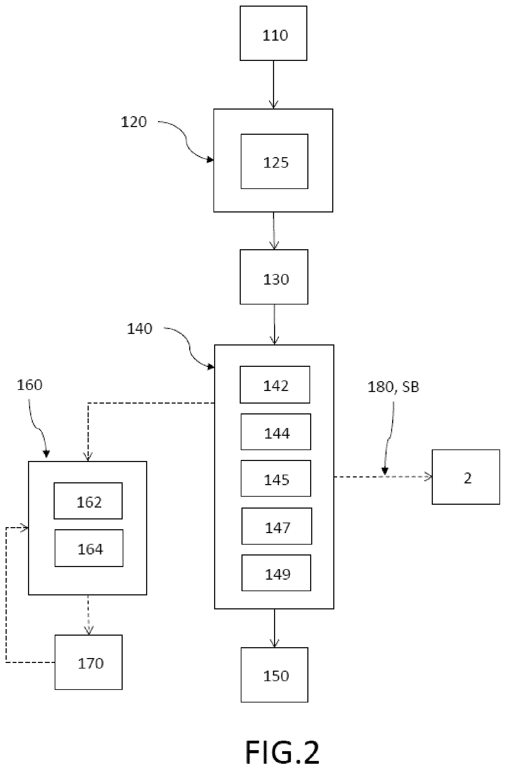

Fig.2 zeigt eine weitere Ausführungsform eines erfindungsgemäßen Verfahrens zur Steuerung des erfindungsgemäßen Systems aus Fig.1 umfassend die Schritte des nachträglichen Verbindens 110 eines Datenmoduls 5 mit dem jeweiligen bereits vorher bestehenden Gebäudeautomationssystem 1 auf geeignete Weise; des automatischen Einlesens 120 von Betriebsrohdaten B, die im Gebäudeautomationssystem 1 kommuniziert werden, mittels des Datenmoduls 5, wobei die eingelesenen Betriebsrohdaten B mit einem Zeitstempel Z durch das Datenmodul 5 zur Bildung eines Datenpakets DBZ versehen werden 125; des Übermittelns 130 zumindest der eingelesenen Betriebsrohdaten B oder des Datenpakets DBZ von dem Datenmodul 5 zu einem Analyseserver 6; des Zuordnens 140 einzelner Betriebsrohdaten B aus der Gesamtmenge der Betriebsrohdaten B zu einzelnen physikalischen Parametern und einzelnen Gebäudeanlagen 3 durch ein auf dem Analyseserver 6 ausgeführtes Analyseprogramm 61 ohne weitere Kenntnisse der Gebäudesteuerung 2 und der Gebäudeanlagen 3, das in dieser Ausführungsform die Schritte des Kategorisierens und Klassifizierens 142 der übermittelten Betriebsrohdaten B nach ihrer Datenstruktur, des Abspeichern 144 der Betriebsrohdaten B in entsprechenden Zeitreihen ZR gemäß den jeweiligen Kategorien und

Klassifikationen durch das Analyseprogramm 61; des Zugreifens 145 des Analyseservers 6 auf im Gebäudeautomatisationssystem 1 hinterlegte Musterzeitreihen MZR für eine Vielzahl an unterschiedlichen Gebäudeanlagen 3; des Bestimmens 147 einer Wahrscheinlichkeit W für mindestens eine der Zeitreihen ZR an Betriebsrohdaten B anhand der Musterzeitreihen MZR, dass diese Zeitreihe ZR einer bestimmter Gebäudeanlage 3 zuzuordnen ist; und des Zuordnens 149 der Zeitreihe ZR an Betriebsrohdaten B zu einer bestimmten Gebäudeanlage 3 durch das Analyseprogramm 61, sofern die für diese Zeitreihe ZR bestimmte Wahrscheinlichkeit W einen vordefinierten Schwellenwert SW übersteigt, umfasst; gefolgt vom Schritt des Überprüfens 150 einer Qualität der Steuerung der Gebäudeanlagen 3 durch die Gebäudesteuerung 2 auf Basis der zugeordneten Betriebsrohdaten B. Dabei kann das Verfahren zusätzlich die Schrittes desautomatischen Erstellens 160 eines Anlagenschaltbildes für die jeweilige Gebäudesteuerung 2 aus den zugeordneten Gebäudeanlagen 3 umfassend die Schritte des Überprüfens 162 durch das Analyseprogramm 61, ob bei einem Wertesprung in den Betriebsrohdaten B einer Zeitreihe ZR eine Korrelation mit anderen Wertesprüngen in anderen Zeitreihen ZR besteht, und des Verknüpfens 164 der den jeweiligen Zeitreihen ZR zugeordneten Gebäudeanlagen 3 im Anlagenschaltbild miteinander bei festgestellter Korrelation der Wertesprünge der jeweiligen Zeitreihen ZR; gefolgt von dem Schritt des dynamischen Anpassens 170 des Anlagenschaltbildes bei Zuordnung weiterer Zeitreihen ZR zu den Gebäudeanlagen 3. Das Verfahren kann des Weiteren den Schritt des Übermittelns 180 von Steuerbefehlen SB an die Gebäudesteuerung 2 auf Basis der analysierten Betriebsrohdaten B zur Optimierung der Steuerung der Gebäudeanlagen 3 durch den Analyseserver 6 umfassen.

### Liste der Bezugszeichen

- 1: Gebäudeautomatisationssystem
- 2: Gebäudesteuerung
- 3: Gebäudeanlage
- 4: Datenverbindung zwischen Gebäudesteuerung und Gebäudeanlagen
- 5: Datenmodul
- 6: Analyseserver
- 61: Analyseprogramm
- 7: Verbindung zwischen Datenmodul und Analyseserver
- 8: zentrale Cloud
- 10: erfindungsgemäßes System zur automatisierten Analyse und Optimierung von Gebäudeautomationssystemen
- 100: Verfahren zur Steuerung des erfindungsgemäßen Gebäudeautomatisationssystem
- 110: nachträgliches Verbinden eines Datenmoduls (5) mit der bereits bestehenden Datenverbindung
- 120: Einlesen von Betriebsrohdaten mittels des Datenmoduls
- 125: Versehen der Betriebsrohdaten mit einem Zeitstempel zur Bildung eines Datenpakets
- 130: Übermitteln der Betriebsrohdaten vom Datenmodul an den Analyseserver
- 140: Zuordnen einzelner Betriebsrohdaten zu einzelnen physikalischen Parametern und einzelnen Gebäudeanlagen
- 142: Kategorisieren und Klassifizieren der übermittelten Betriebsrohdaten nach ihrer Datenstruktur
- 144: Abspeichern der Betriebsrohdaten in entsprechenden Zeitreihen gemäß den jeweiligen Kategorien und Klassifikationen
- 145: Zugreifen auf hinterlegte Musterzeitreihen
- 147: Bestimmen einer Wahrscheinlichkeit anhand der Musterzeitreihen, dass eine Zeitreihe einer bestimmten Gebäudeanlage zuzuordnen ist
- 149: Zuordnen der Zeitreihe zu einer bestimmten Gebäudeanlage, sofern die bestimmte Wahrscheinlichkeit einen vordefinierten Schwellenwert übersteigt
- 150: Überprüfen einer Qualität der Steuerung der Gebäudeanlagen
- 160: automatisches Erstellen eines Anlagenschaltbildes für die jeweilige Gebäudesteuerung
- 162: Überprüfen, ob Wertesprung in einer Zeitreihe mit anderen Wertesprüngen in anderen Zeitreihen korreliert
- 164: Verknüpfen der den jeweiligen Zeitreihen zugeordneten Gebäudeanlagen im Anlagenschaltbild miteinander bei festgestellter Korrelation
- 170: dynamisches Anpassen des Anlagenschaltbildes bei Zuordnung weiterer Zeitreihen zu den Gebäudeanlagen
- 180: Übermitteln von Steuerbefehlen an die Gebäudesteuerung auf Basis der analysierten Betriebsrohdaten zur Optimierung der Steuerung der Gebäudeanlagen
- A: Anlagenschaltbild
- B: Betriebsrohdaten
- DBZ: Datenpaket umfassend Zeitstempel und Betriebsrohdaten
- MZR: Musterzeitreihen
- SB: Steuerbefehl an die Gebäudesteuerung
- SW: vordefinierter Schwellenwert
- W: Wahrscheinlichkeit, dass eine Zeitreihe an Betriebsrohdaten einer Gebäudeanlage zuzuordnen ist
- Z: Zeitstempel
- ZR: Zeitreihen an Betriebsrohdaten

## Patentansprüche

1. Ein System (10) zur automatisierten Analyse und Optimierung von Gebäudeautomationssystemen (1) umfassend mindestens ein Gebäudeautomationssystem (1) mit mindestens einer Gebäudesteuerung (2) und mehrere Gebäudeanlagen (3), die mittels einer Datenverbindung (4) zur Steuerung durch die Gebäudesteuerung (2) an die Gebäudesteuerung (2) angeschlossen sind, wobei ein Datenmodul (5) mit dem jeweiligen bereits vorher bestehenden Gebäudeautomationssystem (1) auf geeignete Weise verbunden ist, um alle im Gebäudeautomationssystem (1) zwischen Gebäudesteuerung und Gebäudeanlagen kommunizierten gebäudetechnischen Daten als Betriebsrohdaten (B) der Gebäudeanlagen (3) automatisch einzulesen und an einen Analyseserver (6) zu übermitteln, wobei der Analyseserver (6) dazu vorgesehen ist, mittels eines Big-Data-Ansatzes ohne weitere Kenntnisse der Gebäudesteuerung (2) und der Gebäudeanlagen (3) aus einer Gesamtmenge der von dem Datenmodul (5) übermittelten Betriebsrohdaten (B) unter Anwendung eines auf dem Analyseserver (6) ausgeführten Analyseprogramms (61) einzelne Betriebsrohdaten (B) einzelnen physikalischen Parametern und einzelnen Gebäudeanlagen (3) zuzuordnen, wobei bei dem Big-Data-Ansatz aus den verfügbaren Daten bestimmte Informationen herausgefiltert werden, welche Aussagen über Eigenschaften über den grundsätzlichen Anlagenbetrieb zulassen, und das Analyseprogramm (61) die Betriebsrohdaten (6) nach ihrer Datenstruktur kategorisiert, klassifiziert und in entsprechenden Zeitreihen (ZR) gemäß den jeweiligen Kategorien und Klassifikationen abspeichert, wobei das Analyseprogramm (61) aus einer Vielzahl von Zeitreihen aus bekannten Gebäudeautomationssystemen zunächst eine Typklasse der Zeitreihe ermittelt und wobei das Analyseprogramm (61) für die Aufstellung der Zeitreihen (ZR) in den Betriebsrohdaten (B) vorhandenen Zeitinformationen oder einen Zeitstempel (Z), mit dem das Datenmodul (5) die eingelesenen Betriebsrohdaten (BR) versieht, wobei das Datenmodul (5) den Zeitstempel (Z) zusammen mit den die Betriebsrohdaten (B) als Datenpaket (DBZ) an den Analyseserver (6) übermittelt, verwendet und wobei das System (10) dazu ausgestaltet ist, gebäudetechnische Regelkreise auf Basis der vom Analyseprogramm (61) analysierten Betriebsrohdaten zu optimieren,
wobei Analyseserver (6) dazu vorgesehen ist, auf Basis der analysierten Betriebsrohdaten (B) Steuerbefehle (SB) an die Gebäudesteuerung (2) zu übermitteln, um die Steuerung der Gebäudeanlagen (3) zu optimieren, und wobei aus bekannten Zeitreihen von Gebäudeautomationssystemen Typklassen von Zeitreihen ermittelt werden, wobei sich unter den ermittelten Typklassen Sollwerte befinden, und
wobei das Analyseprogramm (61) Ist-Betriebsrohdaten (B) mit Soll-Betriebsrohdaten vergleicht und die Steuerbefehle zum Angleichen der Istan die Soll-Betriebsrohdaten übermittelt werden.

2. Das System (10) nach Anspruch 1,
**dadurch gekennzeichnet,**
**dass** im System (10) Musterzeitreihen (MZR) für eine Vielzahl an unterschiedlichen Gebäudeanlagen (3) hinterlegt sind, auf die das Analyseprogramm (61) zugreifen kann, um anhand der Musterzeitreihen (MZR) eine Wahrscheinlichkeit (W) zu bestimmen, dass eine Zeitreihe (ZR) an Betriebsrohdaten (B) einer bestimmten Gebäudeanlage (3) zuzuordnen ist.

3. Das System (10) nach Anspruch 2,
**dadurch gekennzeichnet,**
**dass** das Analyseprogramm (61) dazu ausgestaltet ist, die Zeitreihe (ZR) an Betriebsrohdaten (B) einer bestimmten Gebäudeanlage (3) zuzuordnen, sofern die für diese Zeitreihe (ZR) bestimmte Wahrscheinlichkeit (W) einen vordefinierten Schwellenwert (SW) übersteigt.

4. Das System (10) nach Anspruch 3,
**dadurch gekennzeichnet,**
**dass** das Analyseprogramm (61) dazu ausgestaltet ist, aus den zugeordneten Gebäudeanlagen (3) automatisch ein Anlagenschaltbild (A) für die jeweilige Gebäudesteuerung (2) zu erstellen und dynamisch bei Zuordnung weiterer Zeitreihen (ZR) zu Gebäudeanlagen (3) anzupassen, vorzugsweise ist Analyseprogramm (61) dazu ausgestaltet, bei einem Wertesprung in den Betriebsrohdaten (B) einer Zeitreihe (ZR) eine Korrelation mit anderen Wertesprüngen in anderen Zeitreihen (ZR) zu überprüfen und bei festgestellter Korrelation im Anlagenschaltbild (A) die zugeordneten Gebäudeanlagen (3) als miteinander verknüpft darzustellen

5. Das System (10) nach einem der voranstehenden Ansprüche,
**dadurch gekennzeichnet,**
**dass** die Übermittlung zumindest der Betriebsrohdaten (B) an den Analyseserver (6) mittels Internetverbindung (7) oder GSM/WLAN/Funkverbindung (7) oder über eine Verbindung (7) über ein doppeltes Ethernet vorgenommen wird, vorzugsweise werden die übermittelten Betriebsrohdaten (B) in einer zentralen Cloud (8) gespeichert.

6. Das System (10) nach einem der voranstehenden Ansprüche,
**dadurch gekennzeichnet,**
**dass** das Datenmodul (5) als Cloud-Lösung implementiert ist, wobei ein Zugriff des Datenmoduls (5) auf die Betriebsrohdaten des Gebäudeautomationssystems (1) durch das Gebäudeautomationssystem (1) gewährt wird,
oder
**dass** das Datenmodul (5) mit der bereits vorher bestehenden Datenverbindung (4) des Gebäudeautomatisationssystems (1) auf geeignete Weise verbunden ist, um zumindest die über die Datenverbindung (4) kommunizierten Betriebsrohdaten (B) der Gebäudeanlagen (3) automatisch einzulesen.

7. Ein Verfahren (100) zur Steuerung eines Systems (10) nach Anspruch 1 umfassend mindestens ein Gebäudeautomationssystem (1) mit mindestens einer Gebäudesteuerung (2) und mehreren Gebäudeanlagen (3), die mittels einer Datenverbindung (4) zur Steuerung durch die Gebäudesteuerung (2) an die Gebäudesteuerung (2) angeschlossen sind, umfassend die Schritte:
- Verbinden (110) eines Datenmoduls (5) mit dem jeweiligen bereits vorher bestehenden Gebäudeautomationssystem (1) auf geeignete Weise;
- automatisches Einlesen (120) aller gebäudetechnischer Daten als Betriebsrohdaten (B), die im Gebäudeautomationssystem (1) zwischen Gebäudesteuerung und Gebäudeanlagen kommuniziert werden, mittels des Datenmoduls (5);
- Übermitteln (130) der eingelesenen Betriebsrohdaten (B) von dem Datenmodul (5) zu einem Analyseserver (6);
- Zuordnen (140) einzelner Betriebsrohdaten (B) aus der Gesamtmenge der Betriebsrohdaten (B) zu einzelnen physikalischen Parametern und einzelnen Gebäudeanlagen (3) mittels eines Big-Data-Ansatzes durch ein auf dem Analyseserver (6) ausgeführtes Analyseprogramm (61) ohne weitere Kenntnisse der Gebäudesteuerung (2) und der Gebäudeanlagen (3) wobei bei dem Big-Data-Ansatz aus den verfügbaren Daten bestimmte Informationen herausgefiltert werden, welche Aussagen über Eigenschaften über den grundsätzlichen Anlagenbetrieb zulassen und die Betriebsrohdaten (6) durch das Analyseprogramm (61) nach ihrer Datenstruktur kategorisiert, klassifiziert und in entsprechenden Zeitreihen gemäß den jeweiligen Kategorien und Klassifikationen abspeichert werden, wobei aus einer Vielzahl von Zeitreihen aus bekannten Gebäudeautomationssystemen zunächst Typklassen der Zeitreihen ermittelt werden, wobei sich unter den ermittelten Typklassen Sollwerte befinden und wobei für die Aufstellung der Zeitreihen (ZR) in den Betriebsrohdaten (B) vorhandenen Zeitinformationen oder ein Zeitstempel (Z), mit dem das Datenmodul (5) die eingelesenen Betriebsrohdaten (BR) versieht, wobei das Datenmodul (5) der Zeitstempel (Z) zusammen mit den die Betriebsrohdaten (B) als Datenpaket (DBZ) an den Analyseserver (6) übermittelt, verwendet werden bzw. wird; und
- Optimierung von gebäudetechnischen Regelkreisen auf Basis der vom Analyseprogramm (61) analysierten Betriebsrohdaten,
- umfassend den weiteren Schritt des Übermittelns (180) von Steuerbefehlen (SB) an die Gebäudesteuerung (2) auf Basis der analysierten Betriebsrohdaten (B) zur Optimierung der Steuerung der Gebäudeanlagen (3) durch den Analyseserver (6),
wobei das Analyseprogramm (61) Ist-Betriebsrohdaten mit Soll-Betriebsrohdaten (B) vergleicht und die Steuerbefehle zum Angleichen der Ist- an die Soll-Betriebsrohdaten übermittelt werden

8. Das Verfahren (100) nach Anspruch 7, umfassend die weiteren Schritte:
- Versehen (125) der eingelesenen Betriebsrohdaten (B) mit einem Zeitstempel (Z) durch das Datenmodul (5) zur Bildung eines Datenpakets (DBZ), das nachfolgend im Übermittlungsschritt (120) an den Analyseserver (6) übermittelt wird.

9. Das Verfahren (100) nach Anspruch 8, umfassend die weiteren Schritte:
- Zugreifen (145) des Analyseservers (6) auf im System (10) hinterlegte Musterzeitreihen (MZR) für eine Vielzahl an unterschiedlichen Gebäudeanlagen (3);
- Bestimmen (147) einer Wahrscheinlichkeit (W) für mindestens eine der Zeitreihen (ZR) an Betriebsrohdaten (B) anhand der Musterzeitreihen (MZR), dass diese Zeitreihe (ZR) einer bestimmten Gebäudeanlage (3) zuzuordnen ist; und
- Zuordnen (149) der Zeitreihe (ZR) an Betriebsrohdaten (B) zu einer bestimmten Gebäudeanlage (3) durch das Analyseprogramm (61), sofern die für diese Zeitreihe (ZR) bestimmte Wahrscheinlichkeit (W) einen vordefinierten Schwellenwert (SW) übersteigt.

10. Das Verfahren (100) nach Anspruch 9, umfassend die weiteren Schritte:
- automatisches Erstellen (160) eines Anlagenschaltbildes für die jeweilige Gebäudesteuerung (2) aus den zugeordneten Gebäudeanlagen (3); und
- dynamisches Anpassen (170) des Anlagenschaltbildes bei Zuordnung weiterer Zeitreihen (ZR) zu den Gebäudeanlagen (3).

11. Das Verfahren (100) nach Anspruch 10, umfassend die weiteren Schritte:
- Überprüfen (162) durch das Analyseprogramm (61), ob bei einem Wertesprung in den Betriebsrohdaten (B) einer Zeitreihe (ZR) eine Korrelation mit anderen Wertesprüngen in anderen Zeitreihen (ZR) besteht, und
- Verknüpfen (164) der den jeweiligen Zeitreihen (ZR) zugeordneten Gebäudeanlagen (3) im Anlagenschaltbild miteinander bei festgestellter Korrelation der Wertesprünge der jeweiligen Zeitreihen (ZR).

## Claims

1. A system (10) for automated analysis and optimization of building automation systems (1), comprising at least one building automation system (1) with at least one building control (2) and several building systems (3) connected to the building control (2) by means of a data connection (4) for control by the building control (2), wherein a data module (5) is suitably connected to the respective already previously existing building automation system (1) in order to automatically read in all building-related data communicated in the building automation system (1) between building control and building systems as raw operating data (B) of the building systems (3) and transmit them to an analysis server (6), wherein the analysis server (6) is provided to assign individual raw operating data (B) to individual physical parameters and individual building systems (3) by means of a big data approach without further knowledge of the building control (2) and the building systems (3) from a total amount of the raw operating data (B) transmitted by the data module (5) by using an analysis program (61) executed on the analysis server (6), wherein in the big data approach, certain information is filtered out of the available data, which information allows statements to be made about the characteristics of the general system operation, and the analysis program (61) categorizes, classifies and stores the raw operating data (6) according to their data structure in corresponding time series (ZR) in accordance with the respective categories and classifications, wherein the analysis program (61) first determines a type class of the time series from a plurality of time series of known building automation systems, and wherein the analysis program (61) uses time information present in the raw operating data or a time stamp (Z) with which the data module (5) provides the read-in raw operating data (BR) for the compilation of the time series (ZR), wherein the data module (5) transmits the time stamp (Z) together with the raw operating data (B) as a data packet (DBZ) to the analysis server (6), and wherein the system (10) is configured to optimize building-related control circuits based on the raw operating data analyzed by the analysis program (61),
wherein the analysis server (6) is provided to transmit control commands (SB) to the building control (2) based in the analyzed raw operating data (B) in order to optimize the control of building systems (3), and wherein type classes of time series are determined from known time series of building automation system, wherein there are target values among the determined type classes, and
wherein the analysis program (61) compares the actual raw operating data (B) to target raw operating data, and the control commands are transmitted to adapt the actual raw operating data to the target raw operating data.

2. The system (10) according to claim 1,
**characterized in that**
sample time series (MZR) are stored in the system (10) for a plurality of different building systems (3), which can be accessed by the analysis program (61) in order to determine a probability (W) by means of the sample time series (MZW) that a time series (ZR) of raw operating data (B) is to be assigned to a specific building system (3).

3. The system (10) according to claim 2,
**characterized in that**
the analysis program (61) is configured to assign the time series (ZR) of raw operating data (B) to a specific building system (3), provided that that the probability (W) determined for this time series (ZR) exceeds a predefined threshold (SW).

4. The system (10) according to claim 3,
**characterized in that**
the analysis program (61) is configured to automatically create a system circuit diagram (A) for the respective building control (2) from the assigned building systems (3) and to dynamically adapt it when further time series (ZR) are assigned to building systems (3),
the analysis program (61) is preferably configured to check a correlation with other value jumps in other time series (ZR) in the event of a value jump in the raw operating data (B) of a time series (ZR) and, if a correlation is determined, to illustrate the assigned building systems (3) as linked to one another in the system circuit diagram (A) .

5. The system (10) according to any one of the preceding claims, **characterized in that**
the transmission of at least the raw operating data (B) to the analysis server (6) is performed by means of an Internet connection (7) or a GSM/WLAN/radio connection (7) or a connection (7) via double Ethernet, wherein the transmitted raw operating data (B) are preferably stored in a central cloud (8).

6. The system (10) according to any one of the preceding claims, **characterized in that**
the data module (5) is implemented as a cloud solution, wherein an access of the data module (5) to the raw operating data of the building automation system (1) is granted by the building automation system (1),
or
that the data module (5) is suitably connected to the already previously existing data connection (4) of the building automation system (1) in order to automatically read in at least the raw operating data (B) of the building systems (3) communicated via the data connection (4).

7. A method (100) for controlling a system (10) according to claim 1, comprising at least one building automation system (1) with at least one building control (2) and several building systems (3) connected to the building control (2) by means of a data connection (4) for control by the building control (2), comprising the following steps:
- suitably connecting (110) a data module (5) to the respective already previously existing building automation system (1);
- automatically reading in (120) all building-related data communicated in the building automation system (1) between the building control and the building systems as raw operating data (B) by means of the data module (5);
- transmitting (130) the read-in raw operating data (B) from the data module (5) to an analysis server (6);
- assigning (140) individual raw operating data (B) from the total amount of the raw operating data (B) to individual physical parameters and individual building systems (3) by means of a big data approach by an analysis program (61) executed on the analysis server (6) without further knowledge of the building control (2) and the building systems (3), wherein in the big data approach, certain information is filtered out of the available data, which information allows statements to be made about the characteristics of the general system operation, and the raw operating data (6) are categorized, classified and stored by the analysis program (61) according to their data structure in corresponding time series in accordance with the respective categories and classifications, wherein first type classes of the time series are determined from a plurality of time series of known building automation systems, wherein there are target values among the determined type classes, and wherein time information present in the raw operating data (B) or a time stamp (Z) with which the data module (5) provides the read-in raw operating data (BR) is or are used for the compilation of the time series (ZR), wherein the data module (5) transmits the time stamp (Z) together with the raw operating data (B) as a data packet (DBZ) to the analysis server (6); and
- optimizing building-related control circuits based on the raw operating data analyzed by the analysis program (61),
- comprising the further step of transmitting (180) control commands (SB) to the building control (2) based on the analyzed raw operating data (B) to optimize the control of the building systems (3) by the analysis server (6),
wherein the analysis program (61) compares actual raw operating data to target raw operating data (B), and the control commands are transmitted to adapt the actual raw operating data to the target raw operating data.

8. The method (100) according to claim 7, comprising the following further steps:
- providing (125) the read-in raw operating data (B) with a time stamp (Z) by the data module (5) in order to form a data packet (DBZ) which is subsequently transmitted to the analysis server (6) in the transmission step (120).

9. The method (100) according to claim 8, comprising the following further steps:
- accessing (145), by the analysis server (6), sample time series (MZR) stored in the system (10) for a plurality of different building systems (3);
- determining (147) a probability (W) for at least one of the time series (ZR) of raw operating data (B) by means of the sample time series (MZR) that this time series (ZR) is to be assigned to a specific building system (3); and
- assigning (149) the time series (ZR) of raw operating data (B) to a specific building system (3) by the analysis program (61), provided that that the probability (W) determined for this time series (ZR) exceeds a predefined threshold (SW).

10. The method (100) according to claim 9, comprising the following further steps:
- automatically creating (160) a system circuit diagram for the respective building control (2) from the assigned building systems (3); and
- dynamically adapting (170) the system circuit diagram when further time series (ZR) are assigned to building systems (3).

11. The method (100) according to claim 10, comprising the following further steps:
- checking (162), by the analysis program (61), whether there is a correlation with other value jumps in other time series (ZR) in the event of a value jump in the raw operating data (B) of a time series (ZR); and
- linking (164) the building systems (3) in the system circuit diagram assigned to the respective time series (ZR) to each other if a correlation of the value jumps of the respective time series (ZR) is determined.

## Revendications

1. Système (10) pour l'analyse et l'optimisation automatisées de systèmes d'automatisation de bâtiment (1) comprenant au moins un système d'automatisation de bâtiment (1) doté d'au moins un pilotage de bâtiment (2) et plusieurs bâtiments (3), lesquels sont raccordés au moyen d'une liaison de données (4) au pilotage de bâtiment (2) pour la commande par le pilotage de bâtiment (2), dans lequel un module de données (5) est respectivement relié de manière appropriée au système d'automatisation de bâtiment (1) déjà existant, afin de charger automatiquement et de transmettre à un serveur d'analyse (6) toutes les données techniques communiquées entre le pilotage de bâtiment et le bâtiment dans le système d'automatisation de bâtiment (1), en tant que données opérationnelles brutes (B) du bâtiment (3), dans lequel le serveur d'analyse (6) est prévu de façon à affecter des données opérationnelles brutes (B) individuelles, issues d'une quantité totale des données opérationnelles brutes (B) transmises par le module de données (5), à des paramètres physiques individuels et à des bâtiments individuels (3), en utilisant un programme d'analyse (61) exécuté sur le serveur d'analyse (6), au moyen d'une approche Big Data sans connaissances ultérieures du pilotage de bâtiment (2) et des bâtiments (3), dans lequel lors de l'approche Big Data à partir des données disponibles des informations déterminées, autorisant des conclusions sur des propriétés concernant le fonctionnement général du bâtiment, sont filtrées et le programme d'analyse (61) catégorise les données opérationnelles brutes (B) d'après leur structure de données, les classifie et les enregistre dans des séries chronologiques (ZR) correspondantes selon les catégories et classifications respectives, dans lequel le programme d'analyse (61) détermine d'abord une classe de type de la série chronologique parmi une pluralité de séries chronologiques de systèmes d'automatisation de bâtiment connus et dans lequel le programme d'analyse (61) utilise pour la liste des séries chronologiques (ZR) des informations temporelles présentes dans les données opérationnelles brutes (B) ou une estampille horaire (Z) dont les données opérationnelles brutes (BR) chargées sont pourvues par le module de données (5), dans lequel le module de données (5) transmet ensemble au serveur d'analyse (6) l'estampille horaire (Z) et les données opérationnelles brutes (B) en tant que paquet de données (DBZ) et dans lequel le système (10) est configuré de façon à optimiser des circuits de régulation technique de bâtiment sur la base des données opérationnelles brutes analysées par le programme d'analyse (61), dans lequel le serveur d'analyse (6) est prévu pour transmettre des ordres de pilotage (SB) au pilotage de bâtiment (2) sur la base des données opérationnelles brutes (B) analysées afin d'optimiser le pilotage des bâtiments (3), et dans lequel des classes de type de séries chronologiques sont déterminées à partir de séries chronologiques connues de systèmes d'automatisation de bâtiment, dans lequel des valeurs de consigne se trouvent parmi les classes de type déterminées, et dans lequel le programme d'analyse (61) compare des données opérationnelles brutes réelles (B) à des données opérationnelles brutes de consigne et les ordres de pilotage sont transmis pour adapter les données opérationnelles brutes réelles aux données de consigne.

2. Système (10) selon la revendication 1,
**caractérisé**
**en ce que** des séries chronologiques échantillons (MZR) sont déposées dans le système (10) pour une pluralité de différents bâtiments (3), auxquelles le programme d'analyse (61) peut accéder afin de déterminer à l'aide des séries chronologiques échantillons (MZR) une probabilité (W) qu'une série chronologique (ZR) de données opérationnelles brutes (B) soit à associer à un bâtiment (3) déterminé.

3. Système (10) selon la revendication 2,
**caractérisé**
**en ce que** le programme d'analyse (61) est configuré de façon à affecter la série chronologique (ZR) de données opérationnelles brutes (B) à un bâtiment (3) déterminé, pour autant que la probabilité (W) déterminée pour cette série chronologique (ZR) dépasse une valeur seuil prédéfinie (SW).

4. Système (10) selon la revendication 3,
**caractérisé**
**en ce que** le programme d'analyse (61) est configuré de façon à établir automatiquement, à partir des bâtiments affectés (3), un schéma de circuit de bâtiment (A) pour le pilotage de bâtiment (2) respectif et de l'adapter de manière dynamique en cas d'affectation de séries chronologiques (ZR) ultérieures aux bâtiments (3), le programme d'analyse (61) est de préférence configuré de façon à, dans le cas d'un saut de valeur dans les données opérationnelles brutes (B) d'une série chronologique (ZR), contrôler une corrélation avec d'autres sauts de valeur dans d'autres séries chronologiques (ZR) et, dans le cas où une corrélation est établie, représenter dans le schéma de circuit de bâtiment (A) les bâtiments affectés (3) comme mutuellement couplés.

5. Système (10) selon l'une des revendications précédentes,
**caractérisé**
**en ce que** la transmission au moins des données opérationnelles brutes (B) au serveur d'analyse (6) est effectuée au moyen d'une connexion Internet (7) ou d'une connexion GSM/WLAN/radio (7) ou par le biais d'une liaison (7) par le biais d'un double réseau Ethernet, les données opérationnelles brutes (B) transmises sont de préférence enregistrées dans un cloud (8) central.

6. Système (10) selon l'une des revendications précédentes,
**caractérisé**
**en ce que** le module de données (5) est implémenté comme solution cloud, dans lequel un accès du module de données (5) aux données opérationnelles brutes du système d'automatisation de bâtiment (1) est protégé par le système d'automatisation de bâtiment (1),
ou
**en ce que** le module de données (5) est relié de manière appropriée à la liaison de données (4) déjà existante du système d'automatisation de bâtiment (1) afin de charger automatiquement au moins les données opérationnelles brutes (B) des bâtiments (3) communiquées par le biais de la liaison de données (4).

7. Procédé (100) pour la commande d'un système (10) selon la revendication 1 comprenant au moins un système d'automatisation de bâtiment (1) doté d'au moins un pilotage de bâtiment (2) et plusieurs bâtiments (3), lesquels sont raccordés au moyen d'une liaison de données (4) au pilotage de bâtiment (2) pour la commande par le pilotage de bâtiment (2), comprenant les étapes :
- connexion (110) d'un module de données (5) au système d'automatisation de bâtiment (1) respectif déjà existant de manière appropriée ;
- chargement automatique (120) de toutes les données techniques de bâtiment en tant que données opérationnelles brutes (B), communiquées dans le système d'automatisation de bâtiment (1) entre le pilotage de bâtiment et les bâtiments au moyen du module de données (5) ;
- transmission (130) des données opérationnelles brutes (B) chargées du module de données (5) à un serveur d'analyse (6) ;
- affectation (140) de données opérationnelles brutes (B) individuelles issues d'une quantité totale des données opérationnelles brutes (B) à des paramètres physiques individuels et à des bâtiments individuels (3) au moyen d'une approche Big Data par un programme d'analyse (61) exécuté sur le serveur d'analyse (6) sans connaissances ultérieures du pilotage de bâtiment (2) et des bâtiments (3), dans lequel lors de l'approche Big Data à partir des données disponibles des informations déterminées, autorisant des conclusions sur des propriétés concernant le fonctionnement général du bâtiment, sont filtrées et les données opérationnelles brutes (B) sont catégorisées d'après leur structure de données, classifiées et enregistrées dans des séries chronologiques correspondantes selon les catégories et classifications respectives par le programme d'analyse (61), dans lequel des classes de types des séries chronologiques sont d'abord déterminées parmi une pluralité de séries chronologiques de systèmes d'automatisation de bâtiment connus, dans lequel des valeurs de consigne se trouvent parmi les classes de type déterminées, et dans lequel pour la liste des séries chronologiques (ZR); des informations temporelles présentes dans les données opérationnelles brutes (B) ou une estampille horaire (Z) dont les données opérationnelles brutes (BR) chargées sont pourvues par le module de données (5) sont utilisées, dans lequel le module de données (5) transmet ensemble au serveur d'analyse (6) l'estampille horaire (Z) et les données opérationnelles brutes (B) en tant que paquet de données (DBZ) ; et
- optimisation de circuits de régulation techniques de bâtiments sur la base des données opérationnelles brutes analysées par le programme d'analyse (61),
- comprenant l'étape ultérieure de la transmission (180) d'ordres de pilotage (SB) au pilotage de bâtiment (2) sur la base des données opérationnelles brutes (B) analysées afin d'optimiser le pilotage des bâtiments (3) par le serveur d'analyse (6), dans lequel le programme d'analyse (61) compare des données opérationnelles brutes réelles à des données opérationnelles brutes de consigne (B) et les ordres de pilotage sont transmis pour adapter les données opérationnelles brutes réelles aux données de consigne.

8. Procédé (100) selon la revendication 7, comprenant les étapes ultérieures :
- fourniture (125) aux données opérationnelles brutes (B) chargées d'une estampille horaire (Z) par le module de données (5) afin de former un paquet de données (DBZ), lequel est ensuite transmis au serveur d'analyse (6) lors de l'étape de transmission (120).

9. Procédé (100) selon la revendication 8, comprenant les étapes ultérieures :
- accès (145) du serveur d'analyse (6) aux séries chronologiques échantillons (MZR) déposées dans le système (10) pour une pluralité de différents bâtiments (3) ;
- détermination (147) à l'aide des séries chronologiques échantillons (MZR) d'une probabilité (W) pour au moins une des séries chronologiques (ZR) de données opérationnelles brutes (B) que cette série chronologique (ZR) soit à affecter à un bâtiment (3) déterminé ; et
- affectation (149) par le programme d'analyse (61) de la série chronologique (ZR) de données opérationnelles brutes (B) à un bâtiment (3), pour autant que la probabilité (W) déterminée pour cette série chronologique (ZR) dépasse une valeur seuil prédéfinie (SW).

10. Procédé (100) selon la revendication 9, comprenant les étapes ultérieures :
- établissement automatique (160) d'un schéma de circuit de bâtiment pour le pilotage de bâtiment (2) respectif à partir des bâtiments affectés (3) ; et
- adaptation dynamique (170) du schéma de circuit de bâtiment en cas d'affectation de séries chronologiques (ZR) ultérieures aux bâtiments (3).

11. Procédé (100) selon la revendication 10, comprenant les étapes ultérieures :
- contrôle (162) par le programme d'analyse (61), dans le cas d'un saut de valeur dans les données opérationnelles brutes (B) d'une série chronologique (ZR), de l'existence d'une corrélation avec d'autres sauts de valeur dans d'autres séries chronologiques (ZR), et
- couplage (164) mutuel des bâtiments affectés (3) aux séries chronologiques (ZR) respectives dans le schéma de circuit de bâtiment (A) en cas de corrélation établie des sauts de valeur des séries chronologiques (ZR) respectives.
